# EUROPEAN PATENT APPLICATION

(11) **EP 4 008 461 A1**
(43) Date of publication of application: **08.06.2022**
(21) Application number: 21212075.2
(22) Date of filing: 02.12.2021
(51) Int. Cl.: B23B 41/00, B23B 41/06, B23B 39/16, B23B 39/26, B23C 3/35

(54) **KEY CUTTING**

(30) Priority: 04.12.2020 GB 202019163
(71) Applicant: Iconx Limited, Keighley, Yorkshire BD21 4JH (GB)
(72) Inventor: HORSFALL, David, Keighley, BD21 4JH (GB); CROWTHER, Polly, Keighley, BD21 4JH (GB)
(74) Representative: Swindell & Pearson Limited

(57) **Abstract**

The invention concerns a key cutting machine for cutting dimples in dimple keys or elongated recesses in sidewinder keys. The key cutting machine comprises a milling module (100) with rotary cutters (110,120), anvils (810, 812) and control circuitry. The anvil (810, 812) is for stabilising the key blank whilst the rotary cutter (110,120) is cutting the key blank, wherein the anvil (810, 812) engages a first face of the blade of the key blank while the rotary cutter (110,120) is cutting a second face of the blade opposite to the first face. The anvil and/or the rotary cutter are moved into position by the control circuitry.

## Description

### TECHNOLOGICAL FIELD

Embodiments of the present disclosure relate to key cutting. Some relate to a rotary cutter for cutting into a face of a key blank.

### BACKGROUND

Some types of key, such as dimple keys and sidewinder keys, are cut using rotary cutters. The rotary cutter is advanced into a face of the key blank to provide the dimples and/or the elongate recess in the face of the key.

However, many differently dimensioned rotary cutters are required to cut the various sizes of dimples and recesses in the face of the key blank. It is therefore necessary to operate multiple different rotary cutters to cut each key blank, which can be time consuming and inefficient.

### BRIEF SUMMARY

According to various, but not necessarily all, embodiments there is provided a milling module for a key cutting machine, the module comprising: a first rotary cutter and a second rotary cutter, the first and second rotary cutters each including a gear and a shaft projecting from the gear, wherein the shaft includes one or more cutting blades; and a housing configured to locate the gears of the first and second rotary cutters such that the gears of the first and second rotary cutters are arranged in a gear train.

The housing may include first and second openings through which the shafts of the respective first and second rotary cutters are extendable.

The milling module may comprise transmission means for engaging with a drive in the key cutting machine and for engaging with the gear of the first or second rotary cutter, to transfer torque from the key cutting machine to the gear train.

The transmission means may comprise a gear, which forms part of the housing. The gear of the housing may be configured to mesh with the gear of the first or second rotary cutter. At least a portion of the gear of the housing may project outwardly from the remainder of the housing.

The gears of the first and second rotary cutters may be adjacent to one another and meshed with one another.

The shafts of the first and second rotary cutters may be elongate, the length dimension of the shaft of the first rotary cutter defining a longitudinal axis, and wherein the length dimension of the shaft of the second rotary cutter may be substantially parallel to the longitudinal axis. The gears of the first and second rotary cutters may be arranged in the gear train such that the tip of the shaft projecting from the gear of the first rotary cutter is displaced from the tip of the shaft projecting from the gear of the second rotary cutter along a dimension substantially parallel to the longitudinal axis.

The gears may be arranged in the gear train such that the tip of the shaft of the first rotary cutter is oriented in a first direction, and the tip of the shaft of the second rotary cutter is oriented in a substantially opposite second direction.

The gears of the first and second rotary cutters may have substantially the same diameter. The shafts of the first and second rotary cutters may have substantially the same length.

The gears of the first and second rotary cutters may each comprise a gear portion and a spacer portion, wherein the gear portion comprises the gear teeth, and the spacer portion is of reduced diameter relative to the gear portion. The spacer portion of the gear of the first rotary cutter may be on the same side of the gear portion as the tip of the shaft of the first rotary cutter, and wherein the spacer portion of the gear of the second rotary cutter is on the opposite side of the gear portion to the tip of the shaft of the second rotary cutter.

The gears of the first and second rotary cutters may each comprise a hole extending along the axis of rotation of the respective gear for receiving the shaft of the respective rotary cutter.

The first and second openings may be provided in first and second covers of the housing, the first and second covers being substantially planar, and lying in respective first and second planes which are substantially perpendicular to the axis of rotation of the gears.

The milling module may further comprise a third rotary cutter including a gear and a shaft projecting from the gear, wherein the shaft includes one or more cutting blades, the housing being configured to locate the gear of the third rotary cutter such that the gear of the third rotary cutter is arranged in the gear train with the gears of the first and second rotary cutters. The housing may include a third opening through which the shaft of the third rotary cutter is extendable. The gear of the third rotary cutter may be adjacent to, and meshed with, the gear of the second rotary cutter. The gears may be arranged in the gear train such that the tip of the shaft of the third rotary cutter is oriented in the first direction.

The milling module may further comprise a fourth rotary cutter including a gear and a shaft projecting from the gear, wherein the shaft includes one or more cutting blades, the housing being configured to locate the gear of the fourth rotary cutter such that the gear of the fourth rotary cutter is arranged in the gear train with the gears of the first, second and third rotary cutters. The housing may include a fourth opening through which the shaft of the fourth rotary cutter is extendable. The gear of the fourth rotary cutter may be adjacent to, and meshed with, the gear of the third rotary cutter. The gears may be arranged in the gear train such that the tip of the shaft of the fourth rotary cutter is oriented in the second direction.

According to various, but not necessarily all, embodiments there is provided a key cutting machine comprising the milling module of any of the preceding paragraphs.

According to various, but not necessarily all, embodiments there is provided a key cutting machine comprising: a rotary cutter for cutting into a blade of a key blank; an anvil for stabilising the key blank whilst the rotary cutter is cutting the key blank; and control circuitry configured to: cause at least one of the anvil or the rotary cutter to move, such that the anvil is located substantially at a first face of the blade of the key blank and the rotary cutter is located substantially at a second face of the blade of the key blank, the second face of the key blank being on an opposite side of the blank to the first face; and cause the rotary cutter to cut into the second face of the blade of the key blank.

The machine may further include movable jaws configured to clamp onto the key blank. The control circuitry may be further configured to: prior to causing at least one of the anvil or the rotary cutter to move towards the first and second face of the blade of the key blank, cause the jaws to position the blade of the key blank between the anvil and the rotary cutter, with the first face of the blade of the key blank facing towards the anvil, and the second face of the blade of the key blank facing towards the rotary cutter.

The anvil may be movable. The control circuitry may be configured to cause the anvil to move substantially to the first face of the blade of the key blank.

At least one of the anvil or the rotary cutter may be movable in a first dimension. The anvil may be movable in the first dimension. The rotary cutter may be immovable in the first dimension. The jaws may be movable in at least second and third dimensions. The second dimension may be perpendicular to the third dimension. Both the second and third dimensions may be perpendicular to the first dimension.

The jaws may be movable in the first dimension. The control circuitry may be configured to cause the anvil to move substantially to the first face of the blade of the key blank.

The anvil may be movable along a first rail. The anvil may be movable in the first dimension along the first rail.

The rotary cutter may form part of a milling module. The milling module may comprise a further movable rotary cutter, the tip of the further rotary cutter being oriented in a substantially opposite direction to the tip of the rotary cutter. The milling module may be the milling module of any of the preceding paragraphs.

The key cutting machine may comprise a further movable anvil, which is movable in the first dimension, the further anvil being located on an opposite side of the milling module to the anvil. The relative spacing between the anvil and the further anvil may be fixed.

The control circuitry may be further configured to: cause at least one of the anvil or the rotary cutter to move away from the key blank once the rotary cutter has cut into the first face of the blade of the key blank; once at least one of the anvil or rotary cutter have moved away, cause the jaws to position the blade of the key blank between the further anvil and the further rotary cutter; cause the further anvil to move substantially to the second face of the blade of the key blank, and cause the further rotary cutter to move towards and cut into the first face of the blade of the key blank.

The control circuitry may be configured to move the anvil away from the blade of the key blank once the rotary cutter has cut into the first face of the blade of the key blank. The control circuitry may be configured, once the anvil has been moved away, to cause the jaws to position the blade of the key blank between the further anvil and the further rotary cutter.

The control circuitry may be configured to cause the anvil to move substantially to the first face of the blade of the key blank based on predetermined measurements of the key blank. The control circuitry may be configured to cause the rotary cutter to move towards and cut into the second face of the key blank based on predetermined measurements of the key blank.

The anvil may comprise a curved outer surface. The anvil may comprise a cylindrical metal bar.

According to various, but not necessarily all, embodiments there is provided a key cutting machine comprising: a rotary cutter for cutting into the blade of the key blank; an anvil for stabilising the key blank whilst the rotary cutter is cutting the key blank; and a controller configured to: cause at least one of the anvil or the rotary cutter to move, such that the anvil is located substantially at a first face of the blade of the key blank and the rotary cutter is located substantially at a second face of the blade of the key blank, the second face of the key blank being on an opposite side of the blank to the first face; and cause the rotary cutter to cut into the second face of the blade of the key blank.

According to various, but not necessarily all, embodiments there is provided a key cutting machine comprising: a rotary cutter for cutting into the blade of the key blank; an anvil for stabilising the key blank whilst the rotary cutter is cutting the key blank; at least one processor; and at least one memory including computer program code, the at least one memory and the computer program code being configured to, with the at least one processor, cause the key cutting machine at least to perform: causing at least one of the anvil or the rotary cutter to move, such that the anvil is located substantially at a first face of the blade of the key blank and the rotary cutter is located substantially at a second face of the blade of the key blank, the second face of the key blank being on an opposite side of the blank to the first face; and causing the rotary cutter to cut into the second face of the blade of the key blank.

According to various, but not necessarily all, embodiments there is provided a method for a key cutting machine comprising: causing at least one of an anvil or a rotary cutter to move, such that the anvil is located substantially at a first face of a blade of a key blank and the rotary cutter is located substantially at a second face of the blade of the key blank, the second face of the key blank being on an opposite side of the blank to the first face, the movable anvil being for stabilising the key blank whilst the rotary cutter is cutting into the key blank; and causing the rotary cutter to cut into the second face of the blade of the key blank.

A computer program that, when run on a computer, performs the method of any of the preceding paragraphs.

A computer program comprising program instructions for causing an apparatus to perform at least the method of any of the preceding paragraphs.

A non-transitory computer readable medium comprising program instructions for causing an apparatus at least the method of any of the preceding paragraphs.

According to various, but not necessarily all, embodiments there is provided examples as claimed in the appended claims.

### BRIEF DESCRIPTION

Some examples will now be described with reference to the accompanying drawings in which:
Fig. 1A shows an example dimple key blank;
Fig. 1B shows an example high security key blank;
Fig. 1C shows a cross section of the blade of the example key blanks of Figs. 1A & 1B along lines A-A and B-B respectively;
Fig. 2 shows a first perspective view of a milling module, with a front cover of the milling module removed;
Fig. 3 shows a second perspective view of the milling module, with the front cover of the milling module removed;
Fig. 4 shows a top view of the milling module;
Fig. 5 shows a cross section of the milling module along the line A-A of Fig. 4;
Fig. 6 shows a side view of the milling module, with the front cover of the milling module removed;
Fig. 7 shows a cross section along the line B-B of Fig. 6;
Fig. 8 is a perspective view showing the milling module mounted to a platform;
Fig. 9 is a further perspective view showing the milling module mounted to the platform,
with a motor cover removed;
Fig. 10 is a top view showing the milling module mounted to the platform;
Fig. 11 shows a cross section along the line X-X of Fig. 10;
Fig. 12 shows a cross section along the line Y-Y of Fig. 10;
Fig. 13 shows perspective view of a key cutting machine;
Fig. 14 shows a front view of a support plate, the platform and the milling module of the key cutting machine;
Fig. 15 shows a magnified perspective view of the key cutting machine;
Fig. 16 shows a magnified front view of the key cutting machine;
Fig. 17 schematically shows a controller, one or more motors and a reader;
Fig. 18 shows a method according to the present disclosure;
Fig. 19 shows a front perspective view of the milling module mounted to an alternative platform;
Fig. 20 shows a rear perspective view of the milling module mounted to the alternative platform;
Fig. 21 shows a further rear perspective view of the milling module mounted to the alternative platform;
Fig. 22 shows a rear view of the milling module mounted to the alternative platform;
Fig. 23 illustrates a perspective view of an alternative milling module;
Fig. 24 illustrates a front view of the alternative milling module;
Fig. 25 illustrates a top view of the alternative milling module;
Fig. 26 illustrates a first close-up perspective view of the alternative milling module mounted to a further alternative platform;
Fig. 27 illustrates a second close-up perspective view of the alternative milling module mounted to the further alternative platform;
Fig. 28 is a perspective view showing the alternative milling module mounted to the further alternative platform;
Fig. 29 is a further perspective view showing the alternative milling module mounted to the further alternative platform, with a motor cover removed;
Fig. 30 illustrates a perspective view of an alternative key cutting machine;
Fig. 31 illustrates a close-up perspective view of the alternative milling module and the platform in the alternative key cutting machine;
Fig. 32 illustrates a perspective view of a central portion of the alternative key cutting machine;
Fig. 33 illustrates a first perspective view of a lower portion of the alternative key cutting machine; and
Fig. 34 illustrates a second perspective view of the lower portion of the alternative key cutting machine.

### DETAILED DESCRIPTION

Embodiments of the disclosure relate to a milling module for a key cutting machine. The milling module is for cutting a key blank to provide a duplicate copy or copies of an existing key.

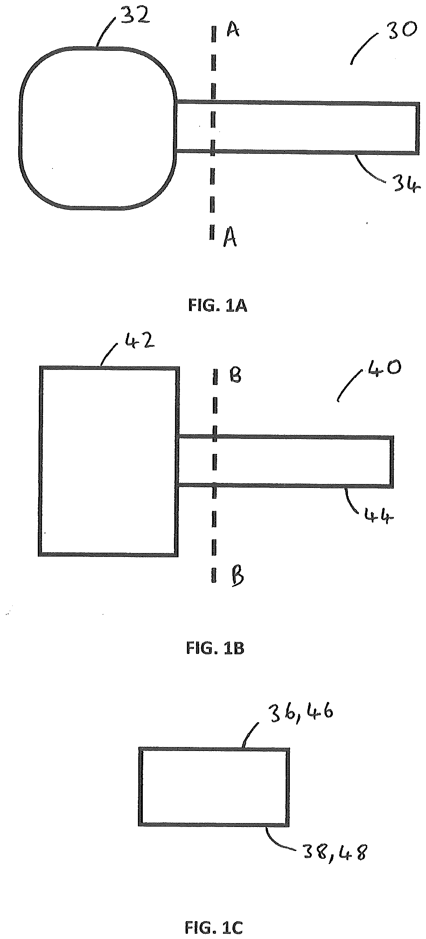

Fig. 1A illustrates an example of a dimple key blank 30. The dimple key blank 30 has a head 32 and a blade 34. The head 32 may have a much greater depth than the blade 34. The blade 34 of the dimple key blank 30 is a rectangular prism shape. Fig. 1C illustrates the cross section of the blade 34 through the line A-A illustrated in Fig. 1A. The dimple key blank 30 is cut by cutting cone-shaped dimples into the upper face 36 of the blade 34 and/or the lower face 38 of the blade 34 (the faces 36, 38 are the surfaces defined by the length and width of the blade 34, where the width of the blade is greater than the depth of the blade).

Fig. 1B illustrates a high security key blank 40. The high security key blank 40 comprises a head 42 and a blade 44. The depth of the head 42 may be much greater than the blade 44. The blade 44 of the high security key blank 40 is a rectangular prism shape. Fig. 1C illustrates a cross section of the blade 44 through the line B-B illustrated in Fig. 1C. The high security key blank 40 is cut by cutting a track into the upper surface 46 of the blade 44 and/or a lower surface 48 of the blade 44 (the faces 46, 48 are the surfaces defined by the length and width of the blade 44, where the width of the blade is greater than the depth of the blade).

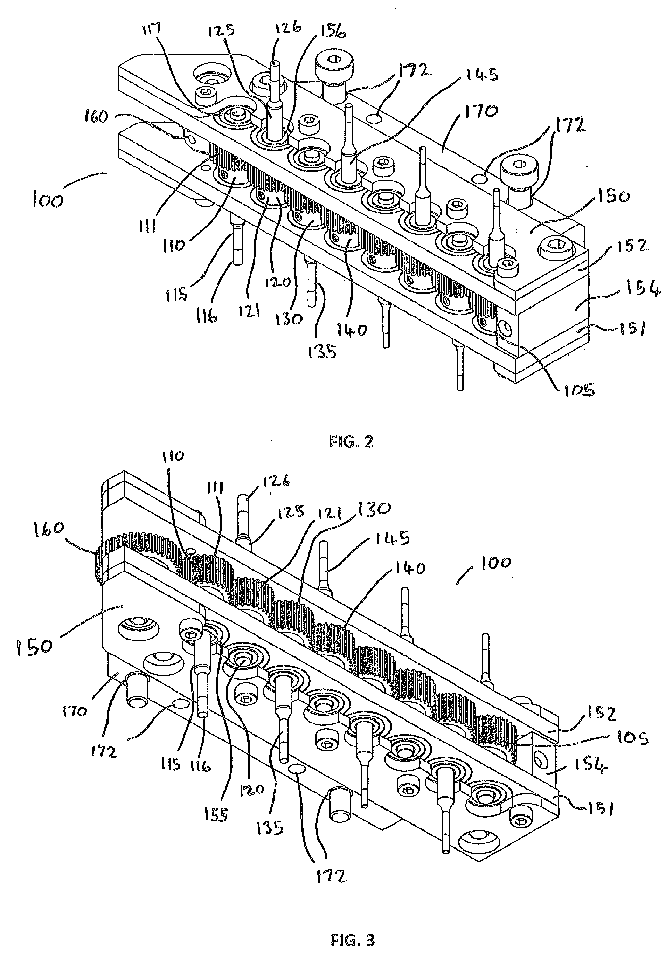

Figs. 2 and 3 show different perspective views of a milling module 100 for a key cutting machine. The milling module 100 is for cutting key blanks, such as the key blanks 30, 40 of Figs. 1A and 1B. The milling module 100 includes a housing 150 and a plurality of rotary cutters 105 configured to cut into the face of the key blank.

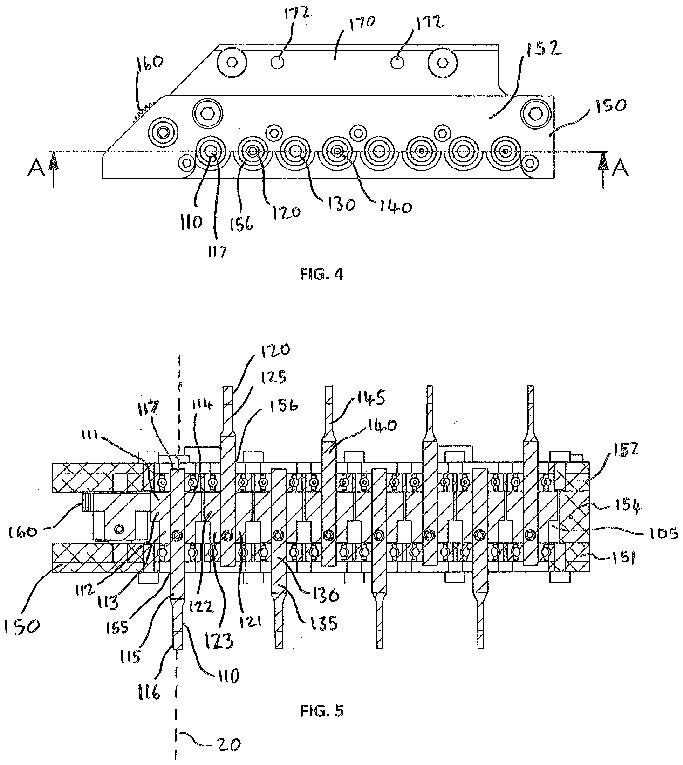

Fig. 4 is a plan view of the milling module 100, and Fig. 5 is a cross-sectional view along line A-A of Fig. 4. As illustrated in Fig. 5, the plurality of rotary cutters 105 includes a first rotary cutter 110. The first rotary cutter 110 is configured to cut into the face of the key blank 30, 40. The first rotary cutter 110 includes a gear 111 and a shaft 115 projecting from the gear 111. In this example the shaft 115 of the first rotary cutter 110 is elongate, and the length dimension of the shaft 115 defines a longitudinal axis 20, which is shown in Fig. 5. The longitudinal axis 20 is substantially coaxial with the axis of rotation of the gear 111, such that rotation of the gear 111 causes rotation of the shaft 115 about its longitudinal axis 20 (see Fig. 5). The first rotary cutter 110 includes one or more cutting blades 116, which in this example are provided at the tip (i.e. the distalmost end) of the shaft 115. The one or more cutting blades 116 are configured to cut into the key blank along a direction parallel to (in this example coaxial with) the longitudinal axis 20 of the shaft 115, and the cutting blades 116 may be configured to cut a blind hole in a face of the key blank. Furthermore, in this example the shaft 115 tapers inwardly (i.e. narrows) to the tip to provide a cutting tip.

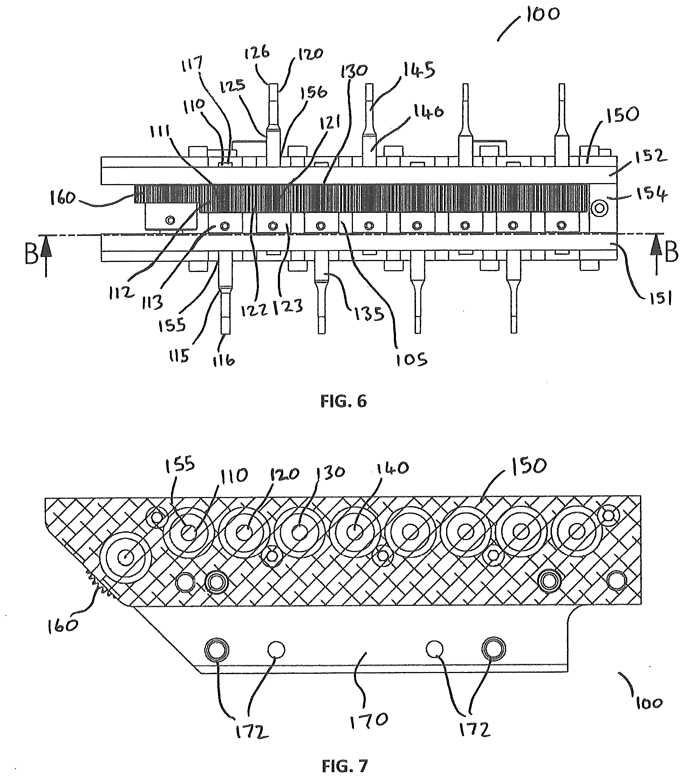

As shown best in cross sectional view of the milling module 100 in Fig. 5 and the side view of the milling module 100 in Fig. 6, the gear 111 includes a gear portion 112 and a spacer portion 113. The gear portion 112 comprises the gear teeth, which are configured to mesh with the teeth of adjacent gears. The spacer portion 113 is of reduced diameter relative to the gear portion 112, and is configured to space the gear portion 112 from an internal surface of the housing 150. In this example, the spacer portion 113 comprises a smooth curved outer surface. The spacer portion 113 projects outwardly from the gear portion 112 along a dimension substantially parallel to the axis of rotation of the gear 111. The spacer portion 113 is on the same side of the gear portion 112 as the tip of the shaft 115 (i.e. the spacer portion 113 is located between the tip of the shaft 115 and the gear portion 112).

In this example, the shaft 115 extends through a hole 114 in the gear 111 (shown in Fig. 5), and is fastened to the gear 111 using a fastener, such as a screw. The hole 114 extends along the axis of rotation of the gear 111. A proximal end 117 of the shaft 115 projects outwardly on an opposite side of the gear 111 to the tip of the shaft 115. Whilst in this example the shaft 115 is fastened to the gear 111, it is to be appreciated that in other examples the shaft 115 could be integrally formed with the gear 111.

The plurality of rotary cutters 105 further includes a second rotary cutter 120, which in this example is substantially the same as the as the first rotary cutter 110, except the spacer portion 123 of the gear 121 is on an opposite side of the gear portion 122 to the tip of the shaft 125. Furthermore, the second rotary cutter 120 may have different cutting blades 126 to the first rotary cutter 110. In this example, the shaft 125 of the second rotary cutter 120 is substantially the same length as the shaft 115 of the first rotary cutter 110.

In some examples, the plurality of rotary cutters 105 may comprise only the first and second rotary cutters 110, 120. In this example, third and fourth rotary cutters 130, 140 are also included in the plurality of rotary cutters 105. The third rotary cutter 130 is substantially the same as the first rotary cutter 110, but may have different cutting blades, and the fourth rotary cutter 140 is substantially the same as the second rotary cutter 120 but may have different cutting blades. In this example, the plurality of rotary cutters 105 also includes fifth, sixth, seventh and eighth rotary cutters (not labelled), so includes eight rotary cutters in total.

The housing 150 is configured to locate the gears 111, 121 of the first and second rotary cutters 110, 120, such that the gears 111, 121 of the first and second rotary cutters 110, 120 are arranged in a gear train. The gear train is a system of intermeshed gears, and in this example the intermeshed gears are arranged in a line, which may be a straight line. In this particular example, the housing 150 is configured to locate each of the gears of each of the plurality of rotary cutters 105 (including the third and fourth rotary cutters 130, 140), such that all of the gears of the rotary cutters are arranged in a gear train.

In the example of Figs. 1 to 7, the gears 111, 121 of the first and second rotary cutters 110, 120 are adjacent to one another and meshed with one another in the gear train. Thus, when the gear 111 of the first rotary cutter 110 rotates, this causes the gear 121 of the second rotary cutter 120 to rotate, and vice versa. In this example the gears 111, 121 of the first and second rotary cutters 110, 120 have substantially the same diameter. Thus, the first and second rotary cutters 110, 120 rotate at substantially the same speed in this example. In other examples, the gears 111, 121 of the first and second rotary cutters 110, 120 could have different diameter, such that the first and second rotary cutters 110, 120 rotate at differing speeds.

In this example, the housing 150 includes first and second covers 151, 152, between which the gears of the plurality of rotary cutters 105 are locatable. The first and second covers 151, 152 are substantially planar, and lie in respective first and second planes which are substantially perpendicular to the axis of rotation of the gears of the plurality of rotary cutters 105. A spacer 154 is provided at a first end of the housing 150 between the first and second covers 151, 152 to space the first cover 151 from the second cover 152.

The housing 150 includes first and second openings 155,156 through which the shafts of the respective first and second rotary cutters 110, 120 are extendable. The first and second openings 155, 156 are shown best in the plan view of Fig. 4 and the cross-sectional view of Fig. 7 along line B-B of Fig. 6. The shafts 115, 125 of the respective first and second rotary cutters 110, 120, which are rotatable in the openings 155, 156, act as pivots for the gears 111, 121 of the respective first and second rotary cutters 110, 120. The openings also enable the tips of the respective shafts 115, 125 of the first and second rotary cutters 110, 120 to project outwardly from the housing 150. The first opening 155 may be provided in the first cover 151, and the second opening 156 may be provided in the second cover 152. In this particular example, the housing 150 includes openings for the shafts of each of the plurality of rotary cutters 105 (including the third and fourth rotary cutters 130, 140) to project outwardly from the housing 150. The plurality of rotary cutters 105 are thus rotatably mounted to the housing 150. Furthermore, in this example, the housing 150 includes further openings for locating the proximal ends of the shafts of the plurality of rotary cutters 105, as shown in Fig. 5.

In this example, the length dimension of the shaft 125 of the second rotary cutter 120 is substantially parallel to the longitudinal axis 20 of the shaft 115 of the first rotary cutter 110. However, in other examples, the length dimension of the shaft 125 of the second rotary cutter 120 may be inclined relative to (i.e. neither perpendicular nor parallel to) the longitudinal axis 20 of the shaft 115 of the first rotary cutter 110. When the shaft 125 of the second rotary cutter 120 is inclined relative to the shaft 125 of the second rotary cutter 120, this enables one of the rotary cutters to, for instance, cut a dimple into the key blank at an angle.

The gears 111, 121 of the first and second rotary cutters 110, 120 are arranged in the gear train such that the tip of the shaft 115 projecting from the gear 111 of the first rotary cutter 110 is displaced from the tip of the shaft 125 projecting from the gear 121 of the second rotary cutter 120 along a dimension substantially parallel to the longitudinal axis 20. In particular, the gears 111, 121 are arranged in the gear train such that the tip of the shaft 115 of the first rotary cutter 110 is oriented in a first direction, and the tip of the shaft 125 of the second rotary cutter 120 is oriented in a substantially opposite second direction. The gears 111, 121 of the first and second rotary cutters 110, 120 may be arranged in the gear train such that the tip of the shaft 115 projecting from the gear 111 of the first rotary cutter 110 is located on a first side of the housing 150, and the tip of the shaft 125 projecting from the gear 121 of the second rotary cutter 120 is located on an opposite second side of the housing 150. In this example, the gears of the plurality of rotary cutters 105 are arranged in the gear train such that tips of the shafts of each of the plurality of rotary cutters 105 are oriented in alternating directions along the gear train as illustrated for instance in Fig. 5. In other words, the tip of the shaft 115 of the first rotary cutter 100 is oriented in the first direction, the tip of the shaft 125 of the second rotary cutter 120 (which is adjacent to the first rotary cutter 110 and the third rotary cutter 130) is oriented in the substantially opposite second direction, the tip of the shaft 135 of the third rotary cutter 130 (which is adjacent to the second rotary cutter 120 and the fourth rotary cutter 130) is oriented in the first direction, the tip of the shaft 145 of the fourth rotary cutter 140 (which is adjacent to the third rotary cutter 130 and a fifth rotary cutter 150) is oriented in the second direction, and so on.

The alternating directions of the shafts of the plurality of rotary cutters 105 provides the advantage that the shafts of the rotary cutters on each side of the milling module 100 rotate in the same direction. Thus, it is not necessary to reverse the direction of the drive for the rotary cutters when moving between rotary cutters on the same side of the milling module 100. Therefore the key blank can be quickly and efficiently cut, by enabling the key blank to be moved between, and be cut by, the rotary cutters on one side of the milling module 100 (e.g. between the first 110, third 130, fifth and seventh rotary cutters) without requiring the direction of the drive to be reversed.

The milling module 100 of Figs 2 to 7 includes transmission means 160 for engaging with a drive in the key cutting machine and for engaging with the gear 111 of the first rotary cutter 110, to transfer torque from the key cutting machine to the gear train. It is to be appreciated that in other examples the transmission means 160 be configured to engage with the gear 112 of the second rotary cutter 120 or any other gear in the gear train, rather than the gear 111 of the first rotary cutter 110.

In this example, the transmission means 160 comprises a gear 160, which forms part of the housing 150, as shown in each of Figs. 2 to 7. The gear is rotatably mounted to the first and second covers 151, 152 of the housing 150. The gear 160 of the housing 150 is configured to mesh with the gear 111 of the first rotary cutter 110 and with a drive gear in the key cutting machine. At least a portion of the gear 160 of the housing 150 projects outwardly from the remainder of the housing 150, as illustrated best in Figs. 3, 4 and 6.

The housing 150 further includes a mounting portion 170 for mounting the milling module 100 to the key cutting machine. In this example, the mounting portion 170 is a projection/tongue 170 for insertion into a recess 220 in the key cutting machine. The mounting portion 170 may also include one or more apertures 172 for locating a fastener such as a screw.

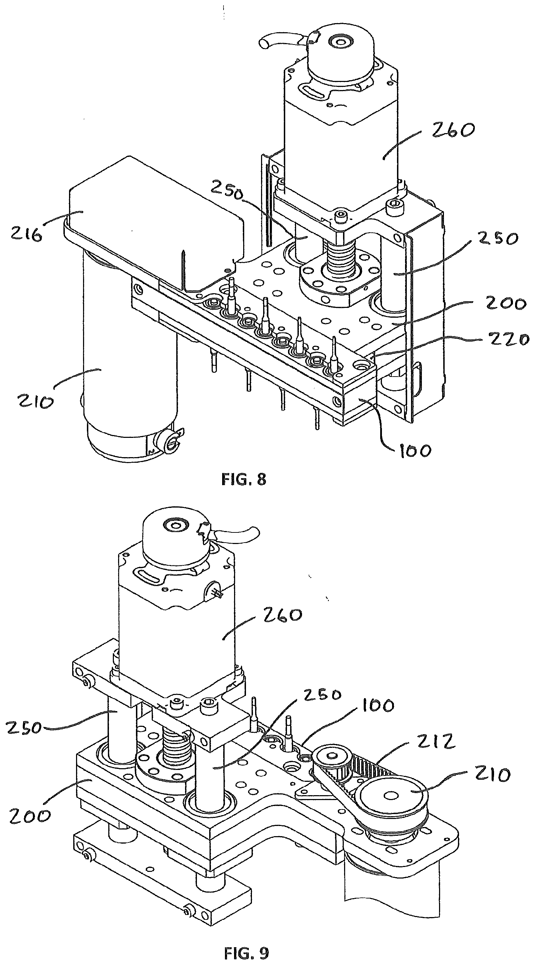

Figs. 8 and 9 are perspective views showing the milling module 100 coupled to a platform 200 of a key cutting machine. Fig. 8 shows the platform with a motor cover 216 and Fig. 9 shows the platform 200 without the motor cover 216. The platform 200 comprises a drive motor 210 which provides the drive for the gear train of the milling module 100. The drive motor 210 is coupled to a drive belt 212 which is coupled to the drive gear 214. The drive gear 214 is engageable with the gear 160 of the housing 150 to power the drive train of the milling module 100.

The platform 200 further includes a mounting portion 220 for mounting the housing 150 to the platform 200, which is partially shown in Fig. 8. The mounting portion 220 of the platform 200 corresponds to the mounting portion 170 of the housing 150. In this example, the mounting portion 220 of the platform 200 is a recess 220 for receiving the projection 170 of the housing 150. The mounting portion 220 of the platform 200 may also include one or more apertures 172 for locating a fastener such as a screw.

There is thus described a milling module 100 with a number of advantages. The milling module 100 is removable, thus enabling the milling module to be interchanged with milling modules comprising different types of cutting blades. Furthermore, the milling module is efficient, requiring only a single source of power for multiple rotary cutters.

Various other modifications may be made without departing from the scope of the disclosure. For instance, differently shaped housing or rotary cutters may be used. A different amount of rotary cutters may be included in the milling module, and the rotary cutters may be in a differently arranged in the housing. For instance, in some examples the shafts of some adjacent rotary cutters may be oriented in the same direction. Furthermore, the gears of the rotary cutters may not be arranged in a straight line. The transmission means may be configured to engage with any one of the gears in the gear train. Different transmission means may be provided such as a drive belt. In some examples, the gear of one of the plurality of rotary cutters 105 may be the transmission means.

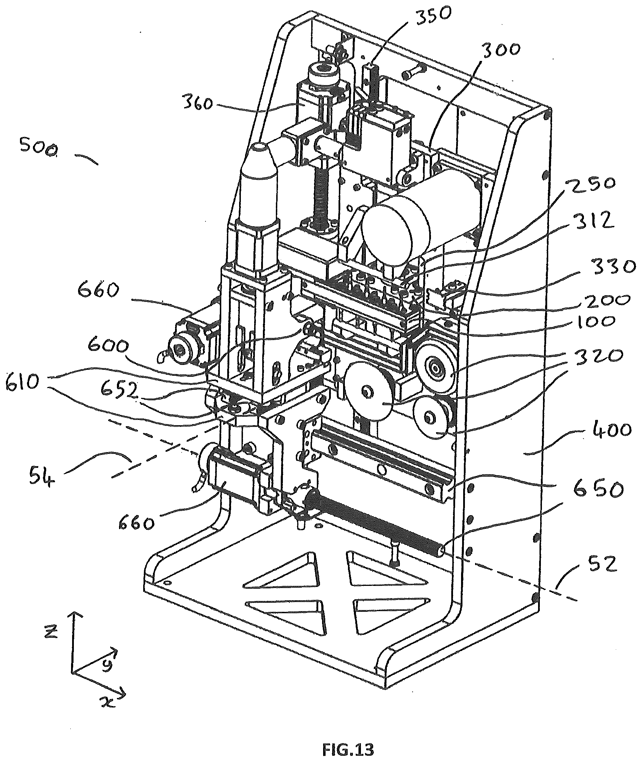

Fig. 13 shows a key cutting machine 500 comprising a frame 400, a support plate 300, a movable key clamp/jaws 600 for clamping the key blank, the platform 200 for the milling module 100, and the milling module 100.

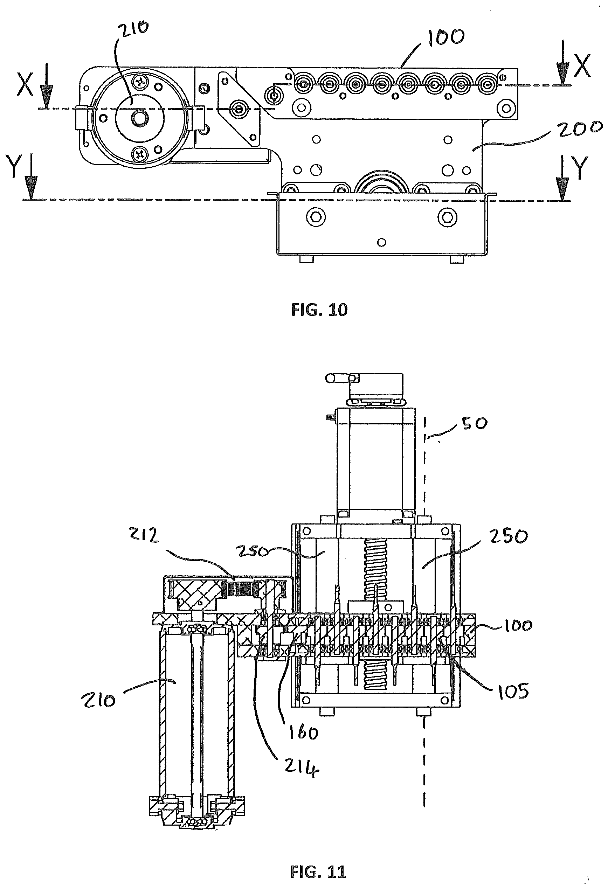

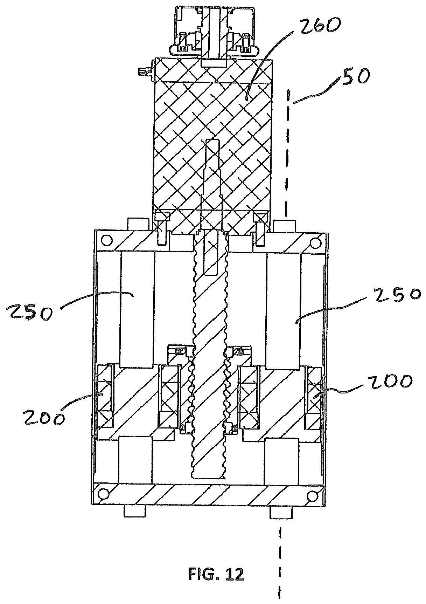

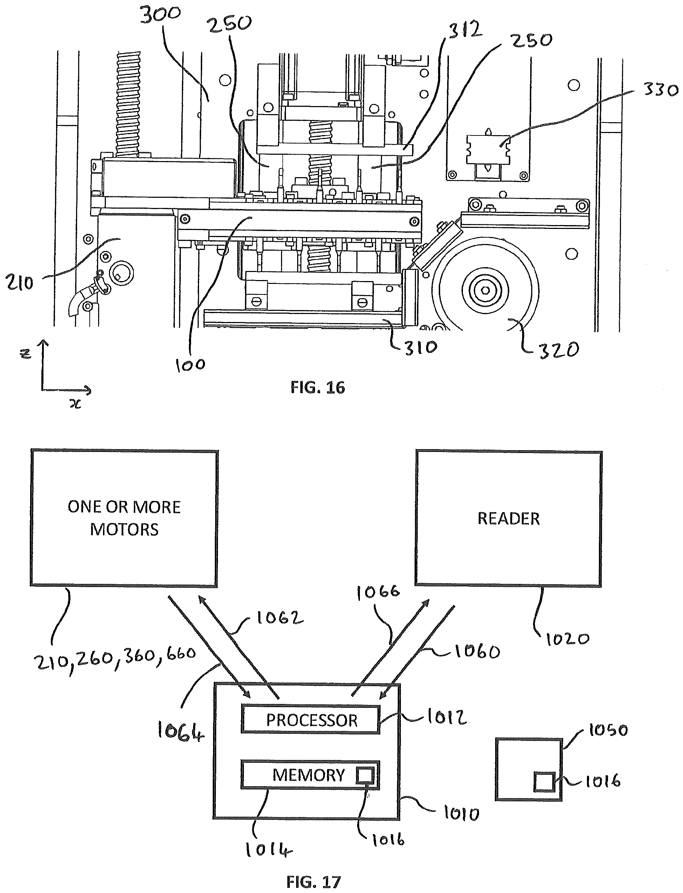

In this example, the platform 200 for the milling module 100 is mounted to, and movable along, a first set of rails 250. The first set of rails 250 are shown in the cross sectional views of Fig. 11 & 12 and the magnified front view of Fig. 16. The first set of rails 250 extend along a first dimension 50, shown in Figs. 11 & 12, such that the platform 200 is movable in the first dimension 50. The first dimension is defined by the z-axis (the vertical axis in this example) shown in Figs. 13 to 16. In this example, the first dimension 50 is substantially parallel to the longitudinal axis 20 of the first rotary cutter 110. A first rail motor 260 is coupled to the platform 200 and the support plate 300, and is configured to urge the platform 200 along the first set of rails 250 relative to the support plate 300. As the platform 200 to which the milling module 100 is mounted is movable, there is provided a movable rotary cutter, such as the first rotary cutter 110.

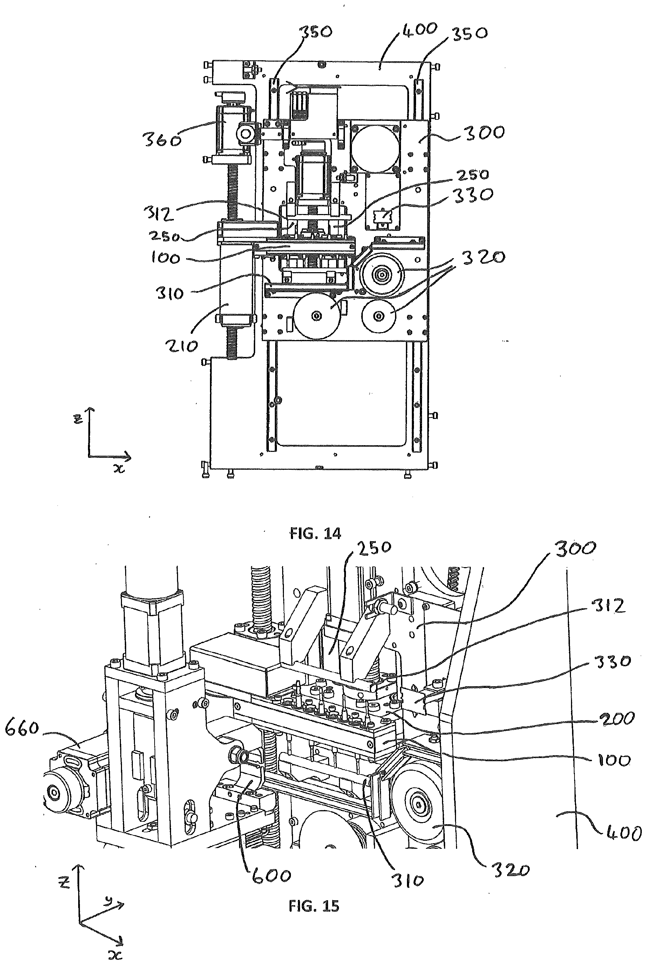

In the example of Figs. 13 to 16, the first set of rails 250 is mounted to the support plate 300. The support plate 300 comprises an anvil 310, as shown in the magnified perspective view of Fig. 15 and the magnified side view of Fig. 16. The support plate 300 may also comprise one or more key cutting instruments 320, such as a disc blade or a deburring wheel. In some examples, the support plate 300 may comprise a calibration block 330 for calibrating the location of the key blank in the movable jaws 600 relative to the support block 300.

The anvil 310 is a weighted block for stabilising the key blank whilst the movable rotary cutter is cutting the key blank. The weight of the anvil 310 reduces vibrations in the key blank whilst being cut, thereby improving the precision of the cut. In this example, the anvil 310 is a metal block. The anvil 310 may comprise a curved surface, and the anvil is preferably a cylindrical metal bar. The curved surface prevents the build up of swarf (i.e. metal filings from the key blank cutting process) on the anvil 310. A significant build up of swarf may cause imprecise cutting of the key blanks if swarf accumulates between the cutting blade and the key blank to be cut.

As illustrated in the front view of the support plate 300 in Fig. 14, the support plate 300 is mounted to, and movable along, a second set of rails 350. The second set of rails 350 are mounted to the frame 400 and extend in the first dimension 50, such that the platform 200 is movable in the first dimension 50. A second rail motor 360 is coupled to the frame 400 and the support plate 300, and is configured to urge the support plate 300 along the second set of rails 350 relative to the frame 400. As the support plate 300 which comprises the anvil 310 is movable, there is provided a movable anvil 310. The anvil is movable in the first dimension 50 in this example.

In this example, the support plate 300 comprises a further anvil 312, which is also a weighted block for stabilising the key blank whilst the rotary cutter is cutting the key blank. The further anvil 312 is spaced from the anvil 310 in the third dimension, and the further anvil is configured to contact the opposite face of the key blank to the face of the key blank the anvil 310 is configured to contact. The further anvil 312 is located on an opposite side of the milling module 100 to the anvil 310. As the support plate 300 which comprises the further anvil 312 is movable, there is provided a further movable anvil 312.

In this example, the anvil 310 and the further anvil 312 are fixed in position relative to each other. That is, there is a fixed spacing between the anvil 310 and the further anvil 312 (in the third dimension) that does not change. When the anvil 310 moves in the first dimension, the further anvil 312 moves in the first dimension, and vice-versa.

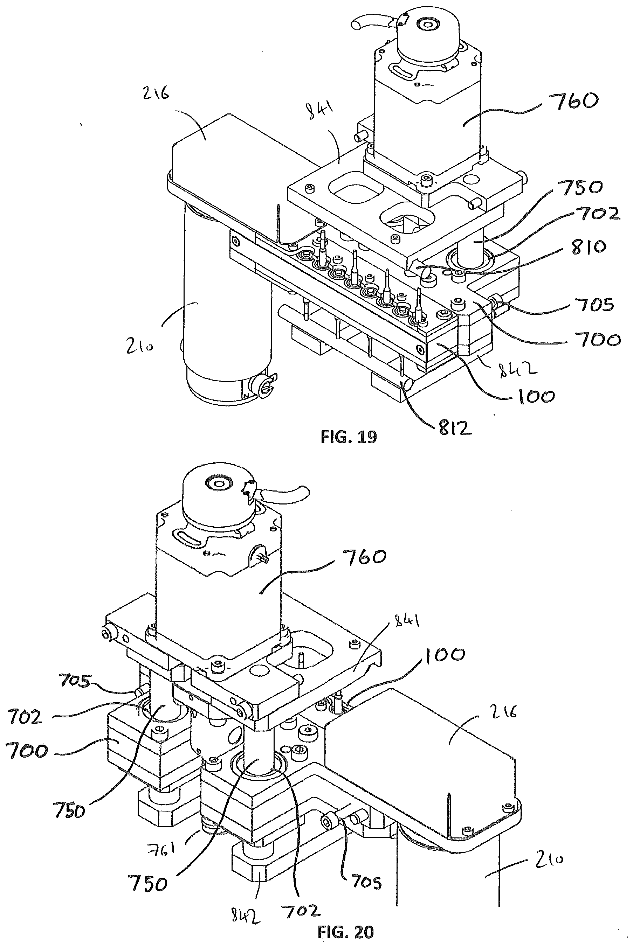

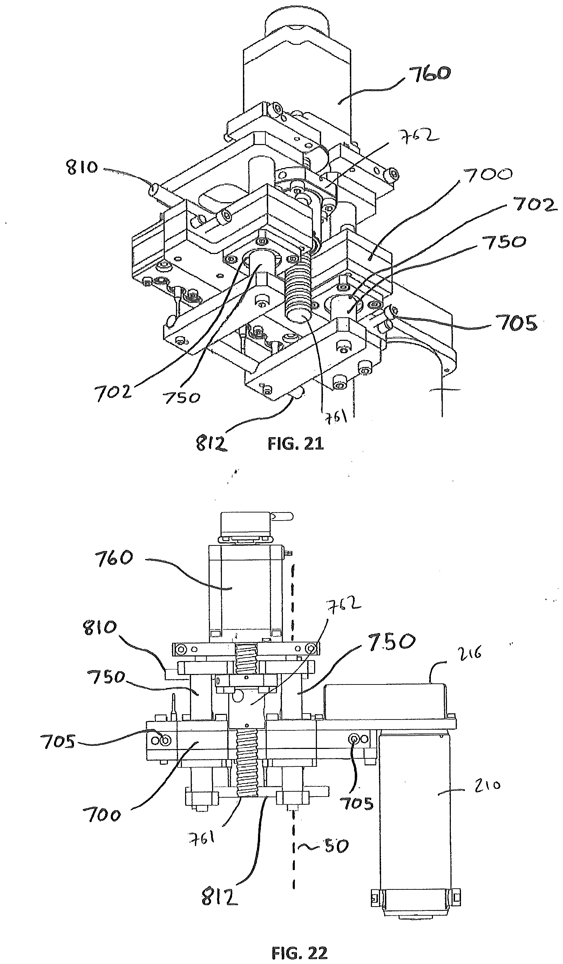

Figs. 19 to 22 illustrate an alternative second arrangement of part of the key cutting machine 500. Figs. 19 to 21 are each different perspective views and Fig. 22 is a rear view. The alternative second arrangement includes an alternative platform 700, an alternative anvil 810 and an alternative further anvil 812. The alternative platform 700 is similar to the platform of Figs. 8 to 16, but in this alternative second arrangement, the alternative platform 700 is fastened to the support plate 300 via one or more fasteners 705 (support plate 300 not shown in Figs. 19 to 22). The fasteners 705 may be bolts or screws. Thus, in the alternative second arrangement, the alternative platform 700 is fixed in position relative to the support plate 300, and the alternative platform 700 is therefore moved with the support plate 300. Furthermore, in the alternative second arrangement, the alternative anvil 810 and the alternative further anvil 812 do not form part of the support plate 300, but instead are fastened to an alternative first set of rails 750, using one or more fasteners such as bolts or screws.

In the illustrated example, the alternative anvil 810 is supported by an alternative anvil support 841 and the alternative further anvil 812 is supported by a further alternative anvil support 842. The alternative anvil support 841 and the further alternative anvil support 842 are fixedly coupled/connected to the alternative first set of rails 750.

The alternative anvil 810 and the further alternative anvil 812 are fixed in position relative to each other, as was the case in the in the example of Figs. 8 to 16. There is a fixed spacing between the alternative anvil 810 and the further alternative anvil 812 (in the third dimension) that does not change. When the alternative anvil 310 moves in the first dimension, the further alternative anvil 312 moves in the first dimension, and vice-versa.

The alternative second arrangement further includes an alternative first rail motor 760. The alternative first rail motor 760 is configured to urge the alternative first set of rails 750 along the first dimension 50, rather than to urge the platform 200 along the first set of rails 260 as in the example of Figs. 8 to 16. In the example of Figs. 19 to 22, the alternative first rail motor 760 is configured to urge the alternative first set of rails 750 through one or more holes 702 in the alternative first platform 700. The urging of the alternative first set of rails 750 in the first dimension 50 by the alternative first rail motor 760 causes the alternative anvil 810 and the alternative further anvil 812 to move in the first dimension 50.

As described previously, in the example of Figs. 8 to 16 the support plate 300 comprises the anvil 310 and further anvil 312, and the milling module 100 is mounted to the platform 200. In Figs. 8 to 16, the platform 200 is therefore movable in the first dimension 50 relative to the support plate 300, and the support plate 300 is movable in the first dimension 50 relative to the frame 400, such that the anvils 310, 312 and the milling module 100 are movable relative to one another in a dimension in the first dimension 50. In the alternative second arrangement of Figs 19 to 22 described in the paragraph above, the alternative anvils 810, 812 and the milling module 100 (which is mounted to the alternative platform 700) are also movable relative to one another in a dimension in the first dimension 50.

In the example of Figs. 19 to 22, the alternative first rail motor 760 comprises a shaft 761. The shaft 761 in this example is an elongate shaft with an external threading. A ball screw 762 is located on the shaft 761 and extends around at least the majority of the circumference of the shaft 761. The ball screw 762 is engageable with the external thread on the shaft 762.

The alternative first rail motor 760 may be a stepper motor. The alternative first rail motor 760 is configured to rotate the shaft 761, which causes the ball screw 762 to move along the shaft 761. The ball screw 762 is coupled to the alternative anvil supports 841, 842. In this regard, in the illustrated example, the ball screw 762 is (directly) connected to the alternative anvil support 841, which is in turn connected to the further alternative anvil support 842 via the alternative first set of rails 750. Thus, rotating of the shaft 761 causes the ball screw 762 to move, leading to movement of the alternative anvil supports 841, 842 and the alternative anvils 810, 812. It will be appreciated that the ball screw 762 could be directly connected to the further alternative anvil support 842 instead of the alternative anvil support 841.

In the example of Figs. 8 to 16, the movable jaws 600 are configured to clamp onto the key blank, to enable the key blank to be moved towards the milling module 100 to be cut. The jaws 600 are movable in second and third dimensions 52, 54, shown in Fig. 13. The second and third dimensions 52, 54 are both perpendicular to the first dimension 50, and the second dimension 52 is perpendicular to the third dimension 54. The second and third dimensions 52, 54 are defined by the x and y axes respectively (axes shown in Figs. 13 to 16). The jaws 600 may comprise one or more teeth for gripping the key blank. In this example, the jaws 600 are mounted to a support 610, which is mounted to, and movable along, third and fourth rails 650, 652. The third and fourth rails 650, 652 extend in second and third dimensions 52, 54 respectively, such that the support 610 and jaws 600 are movable in the second and third dimensions 52, 54. The key cutting machine 500 comprises one or more third rail motors 660, which are coupled to the frame 400 and the support 610 for the jaws. The one or more third rail motors 660 are configured to urge the support 610 for the jaws 600 along the third and fourth sets of rails 650, 652 relative to the frame 400.

The key cutting machine 500 further comprises controller 1010, which is schematically shown in Fig. 17. In this example, the controller 1010 is operationally coupled to one or more of the motors 210, 260, 360, 660 described herein. Some or all of the one or more motors 210, 260, 360, 660 described herein may be electric motors, such as stepper motors. Each motor 210, 260, 360, 660, 760 may have a threaded shaft and a ball screw mounted to the threaded shaft. The ball screw is urged along the threaded shaft when the shaft rotates, to urge any objects coupled to the ball screw in the same direction/dimension as the ball screw. Any number or combination of intervening elements can exist between the controller 1010 and the one or more motors 210, 260, 360, 660, 760 (including no intervening elements).

The controller 1010 is configured to receive a signal indicating the parameters of the key blank to be cut. In some examples, the parameters may be determined by a reader 1020 to determine the type of key blank to be cut and the required shape for the blank to be cut to. The reader may include a camera and/or a laser. In other examples, the parameters may be inputted for instance by a user. In some examples, a signal is sent from the reader 1020 to the controller 1010, which is represented by arrow 1060.

The controller 1010 is able to control the one or more motors 210, 260, 360, 660, 760 to turn on, turn off, or change speed. This is illustrated by arrow 1062. In some examples, the one or more motors 210, 260, 360, 660, 760 may send operational data to the controller 1010, such as data indicating the speed of the one or more motors 210, 260, 360, 660, 760 or data indicating whether the one or more motors 210, 260, 360, 660, 760 are on or off, as represented by arrow 1064.

Implementation of the controller 1010 may be as control circuitry. The controller may be implemented in hardware alone, have certain aspects in software including software alone or can be a combination of hardware and software (including firmware).

The controller 1010 may be implemented using instructions that enable hardware functionality, for example, by using executable instructions of a computer program 1016 in a general-purpose or special-purpose processor 1012 that may be stored on a computer readable storage medium (disk, memory etc.) to be executed by such a processor 1012.

The processor 1012 is configured to read from and write to the memory 1014. The processor 1012 may also comprise an output interface via which data and/or commands are output by the processor 1012 and an input interface via which data and/or commands are input to the processor 1012.

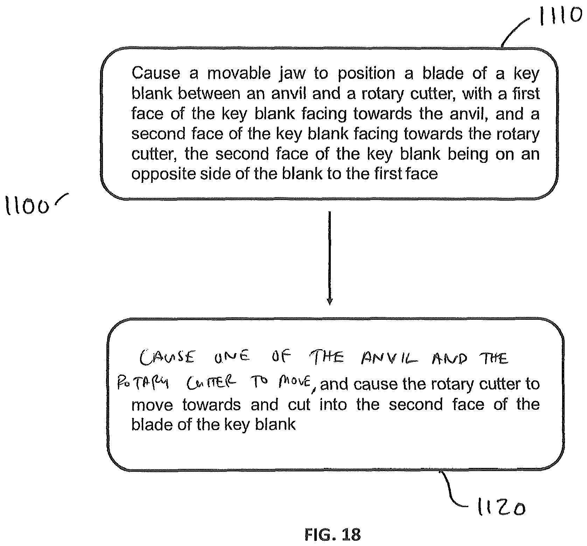

The memory 1014 stores a computer program 1016 comprising computer program instructions (computer program code) that controls the operation of the controller 1010 when loaded into the processor 1012. The computer program instructions, of the computer program 1016, provide the logic and routines that enables the controller 1010 to perform the method illustrated in Fig. 18. The processor 1012 by reading the memory 1014 is able to load and execute the computer program 1016.

The computer program 1016 may arrive at the controller 1010 via any suitable delivery mechanism 1050, as shown in Fig. 17. The delivery mechanism 1050 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 1016.

In some examples, the controller 1010 comprises at least one transceiver that is under control of the processor 1012. The at least one transceiver may comprise any suitable means for receiving and/or transmitting information. The delivery mechanism may be a signal configured to reliably transfer the computer program 1016. The controller 1010 may propagate or transmit the computer program 1016 as a computer data signal.

The at least one transceiver may comprise one or more transmitters and/or receivers. The at least one transceiver may enable a wireless connection between the controller 1010 and the reader 1020 or the one or more motors 210, 260, 360, 660. The wireless connection could be via short-range radio communications such as Wi-Fi or Bluetooth, for example, or over long-range cellular radio links or any other suitable type connection.

In some examples the controller 1010 is an electronic device. The controller 1010 may be an electronic communications device such as a personal computer. The controller 1010 may be a portable electronic communications device such as a handheld electronic communications device or a wearable electronic communications device. The controller 1010, may be configured for mobile cellular communication. The controller 1010 may be a smartphone, a smartwatch, or another type of portable personal computer.

Fig. 18 illustrates an example method 1100 carried out by the controller 1010. The method improves the efficiency and accuracy of the process of cutting a key blank.

In some examples, the controller 1010 causes the reader 1020 to scan a key to determine one or more key cutting parameters, such as the type of key blank to be cut, measurements of the key blank to be cut, such as the dimensions of the key blank, and the required shape for the blank to be cut to. This signal sent by the controller 1010 to the reader 1020 is represented by arrow 1066 in Fig. 17. The reader 1020 may form part of the key cutting machine 500, or may be separate to the key cutting machine 500. In other examples, the key cutting parameters may be received by the controller 1010 from a user, who has inputted the key cutting parameters manually. Thus, a reader 1020 is not required in some examples of the disclosure.

The controller 1010 may then cause a carrying arrangement (not shown) to retrieve a required key blank from a blank storage arrangement (not shown) based on the key cutting parameters, and then to insert the key blank into movable jaws of the key cutting machine, such as the movable jaws 600 of the key cutting machine 500 of Figs. 13 & 15. In some embodiments, the controller 1010 could cause the movable jaws 600 to retrieve the key blank directly from the blank storage arrangement, rather than using the key carrying arrangement as an intermediary between the blank storage arrangement and the movable jaws 600.

At block 1110 of Fig. 18, the controller 1010 causes the movable jaws 600 to position the blade of the key blank between an anvil (such as anvil 310 of Figs. 13 to 16) and a rotary cutter (such as the first rotary cutter 110), with a first face of the blade of the key blank facing towards the anvil 310, and a second face of the blade of the key blank facing towards the rotary cutter 110. The second face of the key blank is on an opposite side of the key blank to the first face of the blade of the key blank. For instance, the upper faces 36, 46 and the lower faces 38, 48 of the blades of the key blanks 30, 40 shown in Figs. 1A to 1C are on opposite sides of the blade. The opposite sides of the blade are separated by the depth of the blade. The depth of the blade is smaller than both the length and the width of the blade.

To position the blade of the key blank between the anvil 310 and the rotary cutter 110 (the blade may be positioned to intersect an imaginary straight line extending from the anvil 310 to the movable rotary cutter), the controller 1010 may cause the jaws 600 to move in the second and/or third dimensions 52, 54. More specifically, the controller 1010 may control the one or more third rail motors 660 to urge the support 610 for the jaws 600 along the third and/or fourth rails 650, 652. Movement of the jaws 600 may be made in only a single dimension at a time, or simultaneously in multiple dimensions. The jaws 600 undergo translational movement in one or both of the second and third dimensions.

The causing of the movable jaw to position the blade of the key blank between the anvil 310 and the rotary cutter 110 may be based on the key cutting parameters, such as the predetermined measurements of the key blank and the required shape for the blank to be cut to. In this example, the movable jaws 600 are configured to clamp the key blank such that the length dimension of the blade of the key blank is substantially parallel to the third dimension 54.

At block 1120 of Fig. 18, the controller 1010 causes at least one of the anvil 310 or the rotary cutter 110 to move, such that the anvil 310 is located substantially at the first face of the blade of the key blank and the rotary cutter 110 is located substantially at a second face of the blade of the key blank. The anvil 310 and/or the rotary cutter 110 may undergo translational movement in this regard.

The controller 1010 may, for example, cause the anvil 310 to move substantially to the first face of the blade of the key blank.

The controller 1010 may then cause the rotary cutter 110 to move towards and cut into the second face of the blade of the key blank. The anvil 310 and rotary cutter 110 are moved in the first dimension 50. The causing of the anvil 310 to move substantially to the first face of the blade of the key blank may be based on the key cutting parameters, such as the predetermined measurements of the key blank, to cause the anvil 310 to contact or be located substantially adjacent to (such as within 0.5mm of) the first face of the blade of the key blank. In this example, the causing of the anvil 310 to move substantially to the first face of the blade of the key blank comprises the controller 1010 controlling the second rail motor 360 to urge the support plate 300 including the anvil along the second set of rails 350.

In some examples, the causing of the rotary cutter 110 to move towards and cut into the second face of the blade of the key blank is carried out once the anvil 310 has been moved substantially to the first face of the blade of the key blank. In other examples, the anvil and the movable rotary cutter 110 are caused to move towards the blade of the key blank simultaneously.

The causing of the rotary cutter 110 to move towards and cut into the second face of the blade of the key blank may also be based on the key cutting parameters, such as the predetermined measurements of the key blank and the required shape for the blank to be cut to. The causing of the rotary cutter 110 to move towards and cut into the second face of the blade of the key blank may comprise causing the rotary cutter 110 to start rotating or to increase its rotation speed. In this example, the causing of the rotary cutter 110 to move towards and cut into the second face of the blade of the key blank comprises the controller 1010 causes the drive motor 210 to begin operation, thereby causing the first rotary cutter 110 to rotate. Furthermore, the controller 1010 controls the first rail motor 260 to urge the platform 200 along the first set of rails 250.

The controller 1010 causes the rotary cutter 110 to cut into the second face of the key blank while the anvil 310 is located substantially at the first face of the blade of the key blank. While the rotary cutter 110 is cutting into the second face of key blank, the anvil 310 remains at the first face of the blade of the key blank and is in contact with the first face of the blade of the key blank. This advantageously stabilises the (blade of the) key blank while the rotary cutter 110 is cutting into the blade of the key blank.

The key blank is held by the jaws 600 during cutting. In some examples, the controller 1010 may cause the movable jaws 600 to move during cutting of the key blank. For instance, the controller 1010 may cause the movable jaws 600 to move in the third dimension to enable the rotary cutter 110 to cut along the length of the key blank.

In some examples, once the second face of the blade of the key blank has been cut, the controller 1010 causes the anvil 310 and/or the rotary cutter 110 to move away from the key blank.

Once the anvil 310 and/or the rotary cutter 110 have moved away, in a first example the controller 1010 causes the movable jaws 600 to position the blade of the key blank between the anvil 310 and a further rotary cutter (such as the third rotary cutter 130 of the milling module 100) which is oriented in substantially the same direction as the rotary cutter 130. The controller 1010 then causes at least one of the anvil 310 or the rotary cutter 130 to move (translate), such that the anvil is located substantially at the first face of the blade of the key blank, and causes the further rotary cutter 130 to move towards and cut into the second face of the blade of the key blank.

The controller 1010 causes the further rotary cutter 130 to cut into the second face of the key blank while the anvil 310 is located substantially at the first face of the blade of the key blank. While the further rotary cutter 130 is cutting into the second face of key blank, the anvil 310 remains at the first face of the blade of the key blank and is in contact with the first face of the blade of the key blank. This advantageously stabilises the (blade of the) key blank while the further rotary cutter 130 is cutting into the blade of the key blank.

In these and/or other examples, the controller 1010 causes the movable jaws 600 to position the blade of the key blank between a further anvil (such as further anvil 312) and a further rotary cutter (such as the second rotary cutter 120 of the milling module 100) which is oriented in a substantially opposite direction to the rotary cutter 120. The controller 1010 then causes the further anvil 312 to move (translate) substantially to the second face of the blade of the key blank, and/or causes the further rotary cutter 120 to move (translate) towards and cut into the first face of the blade of the key blank.

The controller 1010 causes the further rotary cutter 120 to cut into the first face of the key blank while the further anvil 312 is located substantially at the second face of the blade of the key blank. While the further rotary cutter 120 is cutting into the first face of key blank, the further anvil 312 remains at the second face of the blade of the key blank and is in contact with the second face of the blade of the key blank. This advantageously stabilises the (blade of the) key blank while the further rotary cutter 120 is cutting into the blade of the key blank.

Once the key blank has been cut to replicate a key, the controller 1010 may cause the movable jaws 600 to move to a dispensing arrangement (not shown), which is configured to dispense the cut key blank.

The controller 1010 may cause the above movements of one or more of the anvil 310, the further anvil 312, the movable jaws 600, the rotary cutter 110, and the further rotary cutter, 120, 130 based on the key cutting parameters, such as the predetermined measurements of the key blank. The causing of the movements may also be based on the relative locations of the anvil 310, the further anvil 312, the movable jaws 600, the rotary cutter 110, the key blank and/or the further rotary cutter, 120, 130. These relative locations can be calibrated by moving the key blank held in the movable jaws 600 to abut against the calibration block 330.

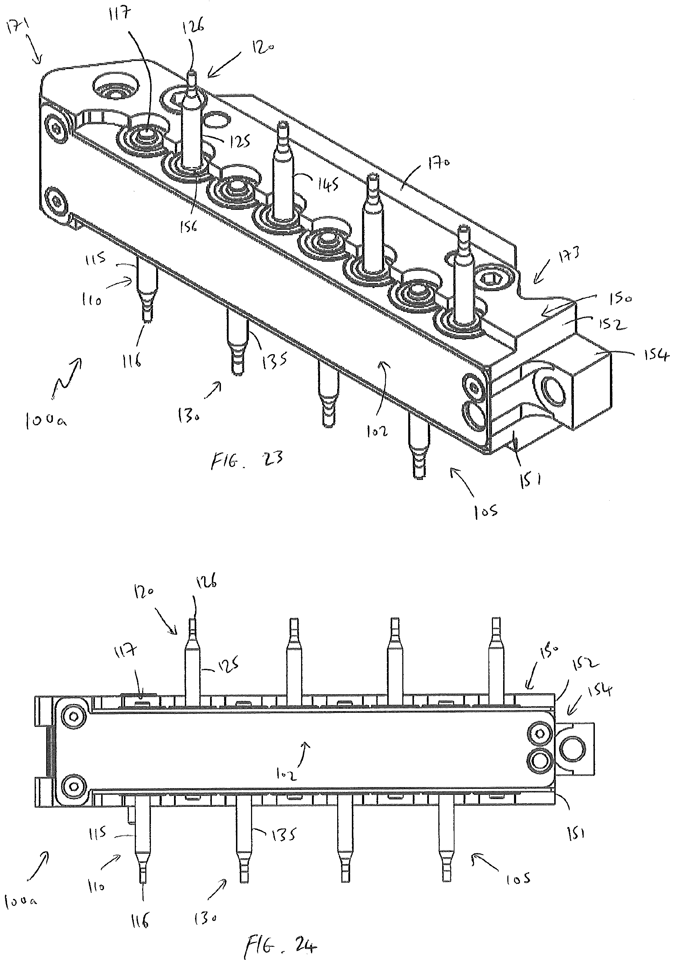

Figs. 23, 24 and 25 illustrate perspective, front and top views of an alternative milling module 100a. It was stated above that front cover of the milling module 100 had been removed in figs. 2 to 7. The front cover 102 is present in the alternative milling module 100a illustrated in figs. 23 to 25, and is similar to the front cover of the milling module 100 of figs. 2 to 7.

The alternative milling module 100a illustrated in figs. 23 to 25 operates in the same manner as the milling module 100 illustrated in figs. 2 to 7 and described above. For example, the description of the operation of the rotary cutters 105 and the gear train above in relation to milling module 100 of figs. 2 to 7 also applies to the alternative milling module 100a of figs. 23 to 25. The same reference numerals have been used in figs. 23 to 25 for features of the alternative milling module 100a which correspond with those of the milling module 100 shown in figs. 2 to 7.

The alternative milling module 100a of figs. 23 to 25 differs from the milling module of figs. 2 to 7 in that the housing 150 comprises a projection 171 and a recess 173 to help to locate the alternative milling module 100a when mounting the alternative milling module 100a to/in a key cutting machine. The projection 171 is for reception by recess 271 of the platform 700 of the key cutting machine. The recess 173 is for receiving a projection 273 of the platform 700 of the key cutting machine. The projection 171 is located on a side of the alternative milling module 100a and the recess 173 is at the rear of the alternative milling module 100a in the illustrated embodiment. In this example, the projection 171 is substantially v-shaped and is for reception by a substantially v-shaped recess 271 of the key cutting machine. The recess 171 is substantially v-shaped and is for receiving a substantially v-shaped projection 273 of the key cutting machine. The base of the v-shape in the projection 171 in the alternative milling module 100a is directed substantially orthogonally to the base of the v-shape in the projection in the platform 700.

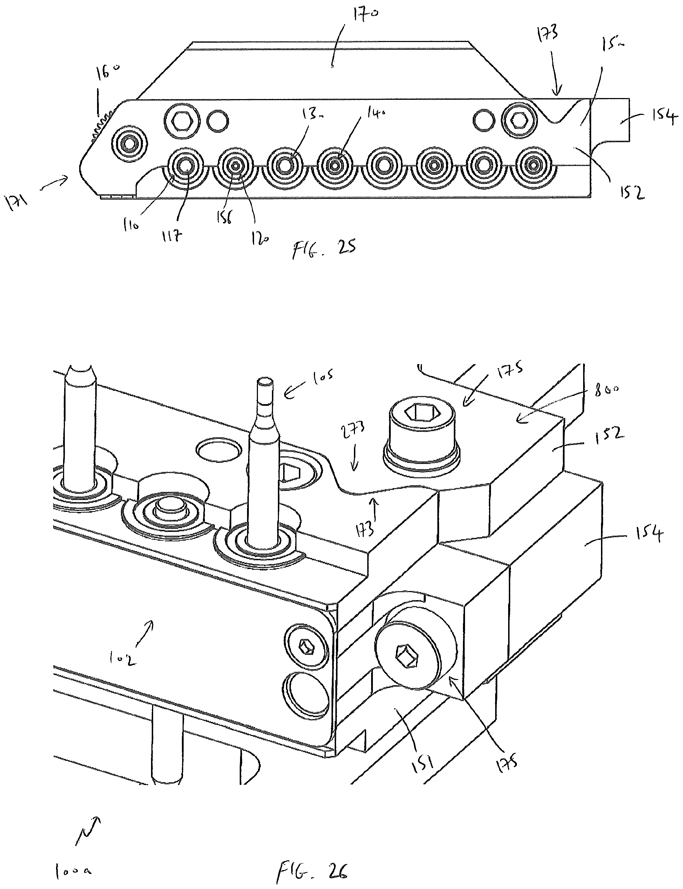

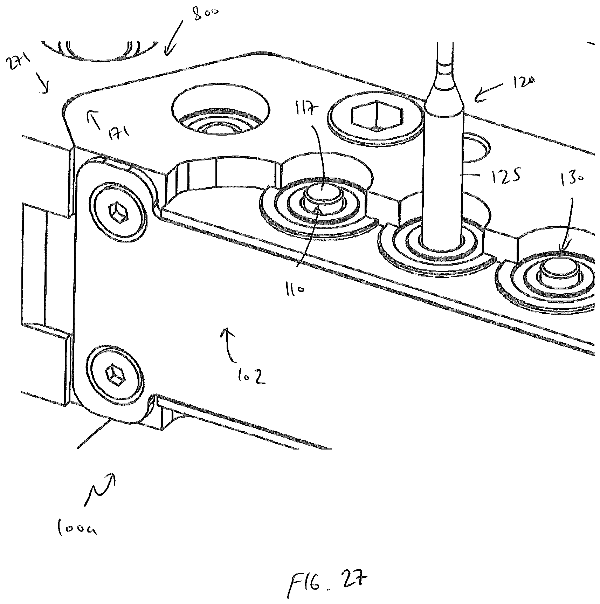

Figs. 26 and 27 illustrate first and second close-up perspective views of the alternative milling module 100a mounted to a further alternative platform 700. As in the milling module 100 illustrated in Figs. 2 to 7, the alternative milling module 100a comprises a mounting portion 170 for mounting the milling module 100 to the key cutting machine. In this example, the mounting portion 170 is a projection/tongue 170 for insertion into a recess in the platform 700 of the key cutting machine.

When the alternative milling module 100a is mounted, the mounting portion 170 is placed in the recess in the key cutting machine, the (v-shaped) projection 171 of the alternative milling module 100a is received by a (v-shaped) recess 271 of the key cutting machine and the (v-shaped) recess 173 of the alternative milling module 100a receives a (v-shaped) projection 271 of the key cutting machine. This is shown in Figs. 26 and 27. One or more fasteners 175 (such as one or more threaded fasteners) may then be used to fasten the alternative milling module 100a to the platform 700.

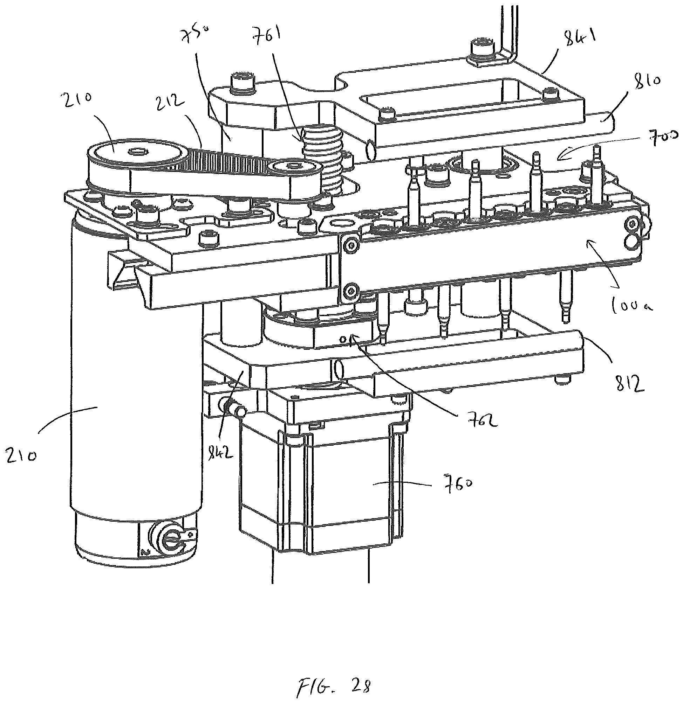

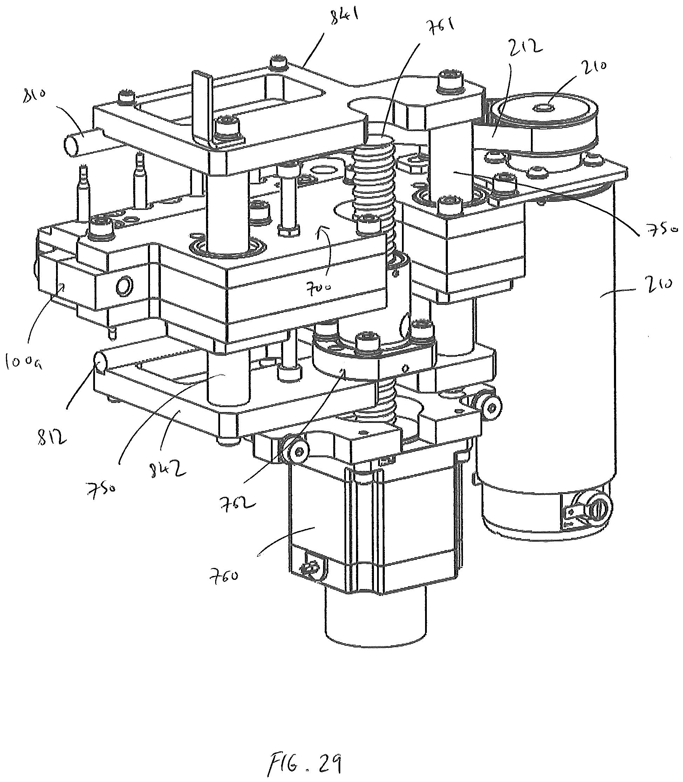

Figs 28 and 29 are perspective views showing the alternative milling module 100a mounted to the further alternative platform 700. Figs. 28 and 29 show the platform 700 without a motor cover. The mounting arrangement 100a illustrated in Figs. 28 and 29 is similar to that described above in relation to Figs. 19 to 22, and therefore the description provided above in relation to Figs. 19 to 22 generally applies to that illustrated in Figs. 28 and 29. The same reference numerals have been used in Figs. 28 and 29 where features correspond with those in Figs. 19 to 22. The differences between the Figs. 28a and 29 example and the example illustrated in Figs. 19 to 22 include:
(i) the ball screw is (directly) connected to the further alternative anvil support 842 rather than the alternative anvil support 841, but it could instead be (directly) connected to the alternative anvil support 841 as in the example illustrated in Figs. 19 to 22; and
(ii) the alternative first rail motor 760 is located underneath the further alternative anvil support 842 rather than above the alternative anvil support 841, but it could instead be the same as in the example of Figs. 19 to 22.

These differences do not, however, appreciably change the operation of the Fig. 28 and 29 example relative to the example of Figs. 19 to 22.

There is a further difference between the two examples in the manner in which the platform 700 is mounted in a key cutting machine. It was explained above that in relation to the example of Figs. 19 to 22, the platform 700 is fixed in position relative to a movable support plate 300, and therefore the platform 700 and the milling module 100a are movable with the support plate 300. In the example of Figs. 28 and 29, however, the platform 700 is fixed in position in the key cutting machine. The milling module 100a is therefore also fixed in position in the key cutting machine. Neither the platform 700 nor the milling module 100a moves.

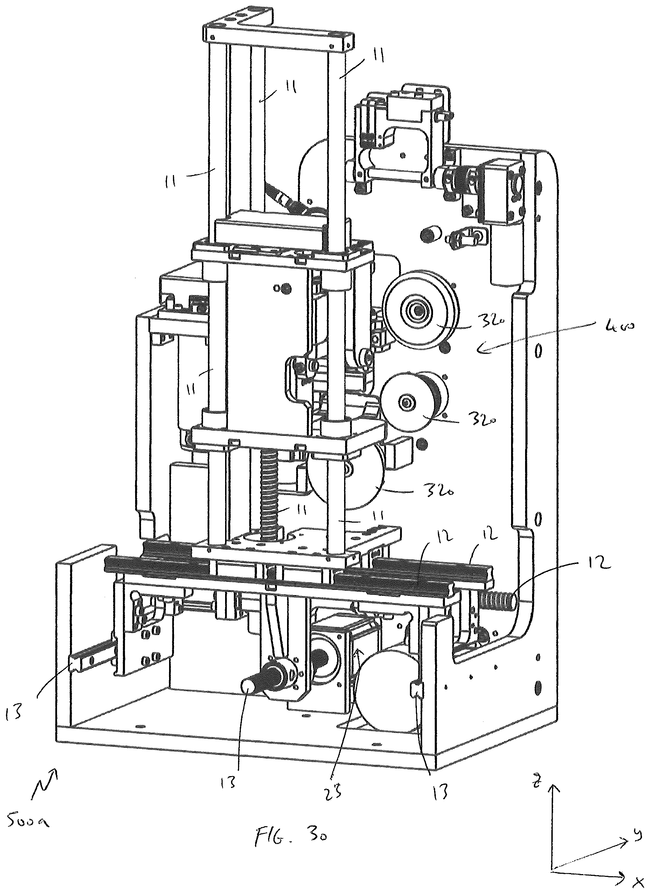

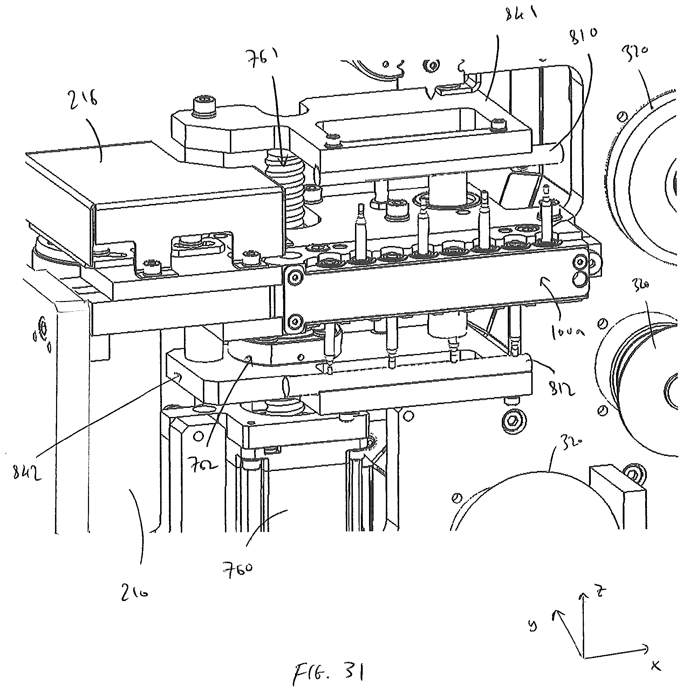

Fig. 30 illustrates a perspective view of an alternative key cutting machine 500a that includes the alternative milling module 100a and the platform 700 of Figs 28 and 29. Fig. 31 illustrates a close-up perspective view of the alternative milling module and the platform 700 in the alternative key cutting machine 500a.

The alternative key cutting machine 500a illustrated in Figs 30 and 31 is similar to the key cutting machine 500 illustrated in Figs 13 to 16 in that it comprises a frame 400, a key clamp/movable jaws 600 for clamping a key blank, a platform 700 for a milling module 100a and a milling module 100a. The alternative key cutting machine 500a illustrated in Figs. 30 and 31 differs from the key cutting machine 500 illustrated in Figs. 13 to 16 in that the platform 700 is fixedly mounted in the key cutting machine 500a and does not move. There is no movable support plate 300 in the alternative key cutting machine 500a. The platform 700 may, for example, be fixedly mounted to the frame 400.

The alternative key cutting machine 500a is similar to the key cutting machine 500 illustrated in Figs. 8 to 16 in that the movable jaws 600, which enable a key blank to be moved to towards the milling module 100a to be cut, are movable in the second and third dimensions which are defined by the x and y axes respectfully in Fig. 30. A difference between the key cutting machines 500, 500a is that in the Fig 8 to 16 example, the movable jaws 600 are not movable in the first dimension, which is defined by the z-axis. However, as there is no movable support plate 300 in the key cutting machine 500a of Figs. 30 and 31, the movable jaws 600 are arranged to move in the first dimension as well as in the second and third dimensions.

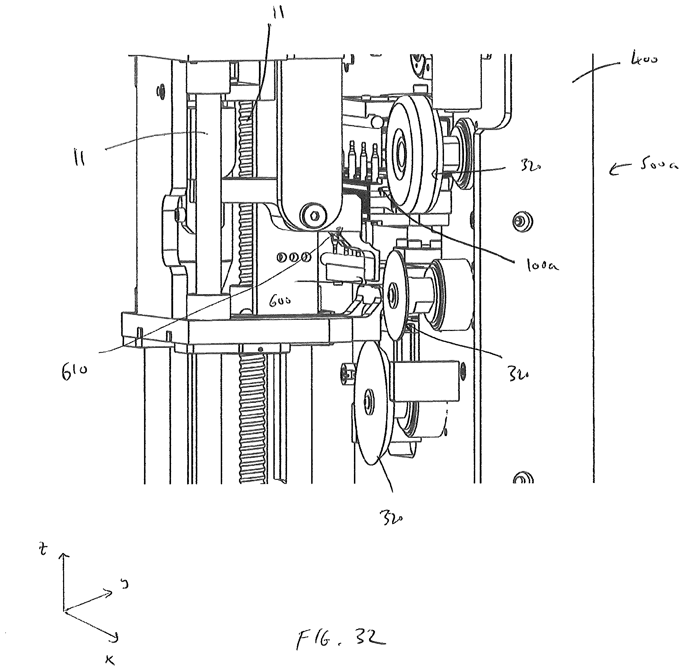

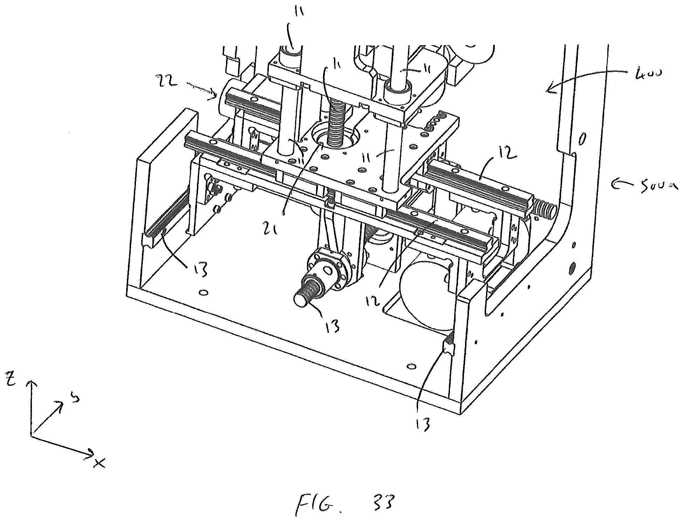

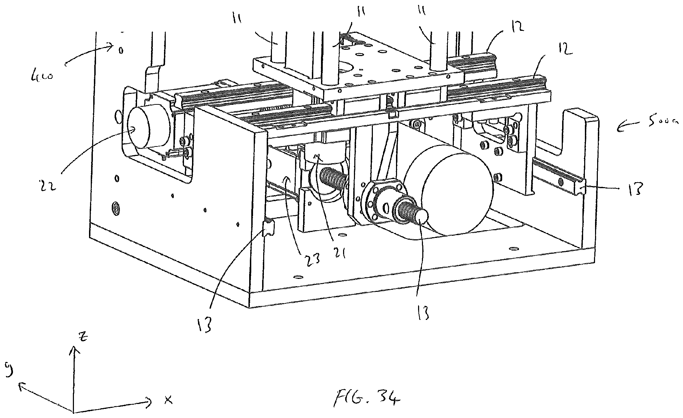

The movable jaws 600 and the support 610 for the jaws 600 are best seen in Fig. 32, which illustrates a perspective view of a central portion of the alternative key cutting machine 500a. Figs. 33 and 34 illustrate perspective views of a lower portion of the alternative key cutting machine 500a.

The movable jaws 600 are arranged to travel along a set of rails 11 extending in (e.g., that are elongate in) the first dimension (z-axis), a set of rails 12 extending in (e.g., that are elongate in) the second dimension (x-axis) and a set of rails 13 extending in (e.g., that are elongate in) the third dimension (y-axis). A rail motor 21 (see Figs. 33 and 34) is provided that is arranged to move (translate) the movable jaws 600 in the first dimension. That rail motor 21 urges the support 610 for the jaws 600 along the set of rails 11 extending in the first dimension. A rail motor 22 (see Figs 33. and 34) is provided that is arranged to move (translate) the movable jaws 600 in the second dimension. That rail motor 22 urges the support 610 for the jaws 600 along the set of rails 12 extending in the second dimension. A rail motor 23 (see Figs. 30 and 34) is provided that is arranged to move (translate) the movable jaws 600 in the third dimension. That rail motor 23 urges the support 610 for the jaws 600 along the set of rails 13 extending in the third dimension.

One, some of all of the rail motors 21, 22, 23 may be electric motors, such as stepper motors. Each rail motor 21, 22, 23 may have a threaded shaft and a ball screw mounted to the threaded shaft. The ball screw may be coupled to the support for the jaws 610 and the jaws 600. The ball screw may be urged along the threaded shaft when the shaft rotates, to urge the jaws 600 in a particular dimension/direction.

A method was described above in relation to Fig. 18 which also generally applies to the alternative key cutting machine 500a, but there are some differences in some of the details of the implementation in the context of the alternative key cutting machine 500a, which are described below.

At block 1110 of Fig. 18, when causing the movable jaws 600 to position the blade of a key blank between an anvil 810, 812 and a rotary cutter (such as the first rotary cutter 110), the controller 1010 may cause the jaws 600 to move (translate) in the first dimension (z-axis) as well as in the second dimension (x-axis) and/or the third dimension (y-axis). The controller 1010 may control the rail motors 21, 22, 23 to urge the support 610 for the jaws 600 along the sets of rails 11, 12, 13. Movement of the jaws 600 may be made in only a single dimension at a time, or simultaneously in multiple dimensions.

It was explained above that, at block 1120 of Fig. 18, the controller 1010 causes at least one of an anvil and a rotary cutter to move, such that the anvil is located substantially at the first face of the blade of the key blank and the rotary cutter is located substantially at a second face of the blade of the key blank. In the context of the alternative key cutting machine 500a described above in relation to Figs. 23 to 34, the milling module 100a is fixed in place in the alternative key cutting machine 500a (due to the platform 700 being fixed to the frame 400 of the alternative key cutting machine 500a). Thus, in the alternative key cutting machine 500a, the rotary cutter is moved and not the anvil(s) 810, 812 in block 1120 of Fig. 18.

There is thus described a key cutting machine 500, 500a with a number of advantages. The key cutting machine 500, 500a enables a key blank to be cut accurately, by holding the key blank securely and reducing vibrations during the cut. Furthermore, the key blank can be cut quickly, by enabling fast transitions between different cutting blades.

Various other modifications may be made without departing from the scope of the disclosure. For instance, different types or differently shaped jaws, anvils, or rotary cutters may be used. Each of the key cutting machine 500, 500a may be differently arranged, and include a different frame. Where a set of rails is provided, a single rail may instead be provided. The items in the cutting machine may be movable using means other than rails, such as pneumatic arms.

In some examples, the step of block 1100 may not be present in the method, and the key blank may for instance be held in a fixed jaw (i.e., a jaw which is not able to move the key blank around the machine). In such examples the anvil 810, 812 and the rotary cutter may be movable parallel to the first axis along with the second and/or third axes such that the movable anvil and movable rotary cutter can move to the first and second faces of the key blank in the fixed jaw.

The alternative arrangements mounting the milling module 100, 100a and for moving the anvils 810, 812 shown in Figs. 19 to 22 and in Figs. 28 to 29 may be used in place of the corresponding part of the key cutting machine 500 shown in Figs. 8 to 16. Where one of these alternative arrangements is used, the controller 1010 may be able to provide signals that cause movement of the alternative platform 700, the alternative anvil 810 and the alternative further anvil 812 according to the method 1100 described above.

While the arrangement for mounting the milling module 100, 100a and for moving the anvils 810, 812 illustrated in Figs. 28 and 29 forms part of the alternative key cutting machine 500a illustrated in Figs. 30 to 34, each of the arrangements illustrated in Figs 8 to 12 and 19 to 22 may be used in its place in the alternative key cutting machine 500a. In such examples, the milling module 100, 100a might or might not be movable in the first/vertical (z-axis) dimension in addition to the jaws 600 being movable in that dimension.

References to 'computer-readable storage medium', 'control circuitry', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one" or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims. For instance, where a set of rails has been referred to, only a single rail might instead be provided. Greater or fewer rails may be provided in each set of rails that those illustrated and described above.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavouring in the foregoing specification to draw attention to those features believed to be of importance it should be understood that the applicant may seek protection via the claims in respect of any patentable feature or combination of features hereinbefore referred to and/or shown in the drawings whether or not emphasis has been placed thereon.

## Claims

1. A key cutting machine comprising:
a rotary cutter for cutting into a blade of a key blank;
an anvil for stabilising the key blank whilst the rotary cutter is cutting the key blank; and
control circuitry configured to:
cause at least one of the anvil or the rotary cutter to move, such that the anvil is located substantially at a first face of the blade of the key blank and the rotary cutter is located substantially at a second face of the blade of the key blank, the second face of the blade of the key blank being on an opposite side of the blank to the first face; and
cause the rotary cutter to cut into the second face of the blade of the key blank.

2. The key cutting machine according to claim 1, wherein the machine further includes movable jaws configured to clamp onto the key blank, and the control circuitry is further configured to:
prior to the causing at least one of the anvil or the rotary cutter to move towards the first and second face of the blade of the key blank, cause the jaws to position the blade of the key blank between the anvil and the rotary cutter, with the first face of the blade of the key blank facing towards the anvil, and the second face of the blade of the key blank facing towards the rotary cutter.

3. The key cutting machine according to claim 1 or 2, wherein the anvil is movable, and the control circuitry is configured to cause the anvil to move substantially to the first face of the blade of the key blank.

4. The key cutting machine according to claim 1 or 2, wherein the at least one of the anvil or the rotary cutter is movable in a first dimension.

5. The key cutting machine according to claim 4, wherein the anvil is movable in the first dimension and, optionally, the rotary cutter is immovable in the first dimension.

6. The key cutting machine according to claim 4 or 5, wherein the jaws are movable in at least second and third dimensions, the second dimension being perpendicular to the third dimension, and both the second and third dimensions being perpendicular to the first dimension, and wherein, optionally, the jaws are movable in the first dimension.

7. The key cutting machine according to any of the preceding claims, wherein the control circuitry is configured to cause the anvil to move substantially to the first face of the blade of the key blank.

8. The key cutting machine according to any of the preceding claims, wherein the anvil is movable along a first rail.

9. The key cutting machine according to claim 8 when dependent on claim 5, wherein the anvil is movable in the first dimension along the first rail.

10. The key cutting machine according to any of the preceding claims, wherein the rotary cutter forms part of a milling module, and wherein the milling module comprises a further rotary cutter, the tip of the further rotary cutter being oriented in a substantially opposite direction to the tip of the rotary cutter.

11. The key cutting machine according to claim 10, wherein the key cutting machine comprises a further anvil located on an opposite side of the milling module to the anvil, and wherein, optionally, the relative spacing between the anvil and the further anvil is fixed.

12. A key cutting machine according to claim 10 or 11 when dependent on claim 2, wherein the control circuitry is further configured to:
cause at least one of the anvil or the rotary cutter to move away from the key blank once the rotary cutter has cut into the first face of the blade of the key blank;
once at least one of the anvil or the rotary cutter has been moved away, cause the jaws to position the blade of the key blank between the further anvil and the further rotary cutter; and
cause the further anvil to move substantially to the second face of the blade of the key blank, and cause the further rotary cutter to move towards and cut into the first face of the blade of the key blank.

13. The key cutting machine of claim 12, wherein the control circuitry is configured to move the anvil away from the blade of the key blank once the rotary cutter has cut into the first face of the blade of the key blank, and configured, once the anvil has been moved away, to cause the jaws to position the blade of the key blank between the further anvil and the further rotary cutter.

14. A key cutting machine according to any of the preceding claims, wherein the control circuitry is configured to cause the anvil to move substantially to the first face of the blade of the key blank based on predetermined measurements of the key blank.

15. A key cutting machine according to any of the preceding claims, wherein the control circuitry is configured to cause the rotary cutter to cut into the second face of the blade of the key blank based on predetermined measurements of the key blank.
